# EUROPÄISCHE PATENTANMELDUNG

(11) **EP 4 744 859 A2**
(43) Veröffentlichungstag der Anmeldung: **20.05.2026**
(21) Anmeldenummer: 25209603.7
(22) Anmeldetag: 17.10.2025
(51) Int. Cl.: B29C 45/50, B29C 45/17, B29C 33/00

(54) **SPRITZGIESSEINHEIT UND MASCHINE ZUR VERARBEITUNG VON KUNSTSTOFFEN**

(30) Priorität: 21.10.2024 DE 102024130528
(71) Anmelder: ARBURG GmbH + Co KG, 72290 Loßburg (DE)
(72) Erfinder: BLETSCHER, Rainer, 72270 Baiersbronn (DE)
(74) Vertreter: RPK Patenanwälte Reinhardt und Kaufmann Partnerschaft mbB (Pforzheim)

(57) **Zusammenfassung**

In einer Spritzgießeinheit für eine Maschine zur Verarbeitung von Kunststoffen und anderer plastifizierbarer Massen ist eine Plastifiziereinheit (10) an einem Maschinenständer (14) über ein mittiges Aufnahmeelement (20) gehalten und wenigstens eine Spindel (42) ist zumindest über eine Teilstrecke des Einspritzhubes innerhalb einer Ausnehmung (22) des mittigen Aufnahmeelements (20) verfahrbar aufgenommen. Ein mit der Spindel (42) zusammenwirkender Einspritzmotor (50) ist vorgesehen, der an einem hinteren verfahrbaren Aufnahmeelement (30) angeordnet ist. Der Einspritzmotor (50) steht über ein Einspritzgetriebe (52) mit der Spindel (42) in Wirkverbindung und ein am hinteren Aufnahmeelement (30) angeordneter elektromechanischer Dosierantrieb (60) ist zum Drehen des Förderelements (12) beim Dosieren des plastifizierbaren Materials vorgesehen. Der Dosierantrieb (60) ist über ein Dosiergetriebe (62) mit dem Förderelement (12) wirkverbunden. Dabei ist das hintere Aufnahmeelement (30) gehäuseartig ausgebildet, wobei das Einspritzgetriebe (52) und das Dosiergetriebe (62) zumindest teilweise im hinteren Aufnahmeelement (30) aufgenommen sind.

## Beschreibung

Die Erfindung betrifft eine Spritzgießeinheit für eine Maschine zur Verarbeitung von Kunststoffen und anderer plastifizierbarer Massen, insbesondere für eine Spritzgießmaschine, mit den Merkmalen des Anspruches 1 sowie eine Maschine mit einer Spritzgießeinheit mit den Merkmalen des Anspruches 15.

Der Begriff "plastifizierbares Material", wie er hier verwendet wird, ist weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige bzw. pulverartige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Der Begriff umfasst auch Recyclate.

Der Begriff "Einspritzhub", wie er hier verwendet wird, ist in Bezug auf einen Einspritzvorgang als Verfahrensschritt beim Spritzgießverfahren zu verstehen, in welchem plastifiziertes und zuvor dosiertes Material der oben definierten Art über ein Förderelement der Spritzgießeinheit, wie eine Förderschnecke, axial zu einem stationären Formträger oder Formplatte der Spritzgießmaschine hin gefördert und in einen Formhohlraum einer Spritzgießform eingespritzt wird, die im Betriebszustand zwischen einem beweglichen Formträger und dem stationären Formträger aufgenommen ist. Dabei vollzieht das Förderelement beim Einspritzvorgang einen axialen Einspritzhub in Richtung zum stationären Formträger, wobei ein mit dem Förderelement zusammenwirkendes, linear verfahrbares Aufnahmeelement bzw. eine Einspritzbrücke über einen Antrieb in Richtung zum stationären Formträger verfahren und das vor das Förderelement dosierte, plastifizierte Material in den Formhohlraum eingespritzt wird.

Herkömmliche Spritzgießmaschinen zur Verarbeitung von Kunststoffen und anderen plastifizierbaren Materialien, wie z.B. Spritzgießmaschinen, umfassen neben den Formträgern insbesondere eine Spritzgießeinheit zur Aufbereitung, Mischung und Homogenisierung eines plastifizierbaren Materials, das in eine Formschließeinheit bzw. in den Formhohlraum der Spritzgießmaschine einzuspritzen ist.

Ein zentrales technisches Element einer Spritzgießeinheit bzw. Spritzgießmaschine ist ein mit dem plastifizierten Material zusammenwirkendes Förderelement, wie eine Förderschnecke. Bei einem Dosiervorgang wird das plastifizierte Material über das Förderelement zunächst zudosiert und bis zu einer an der stationären Formplatte angrenzenden Düse transportiert und davor gestaut. Beim anschließenden Einspritzvorgang wird das Förderelement axial zur Düse bzw. in Richtung zur stationären Formplatte verfahren, so dass das gestaute und dosierte Material in den Formhohlraum gespritzt wird. Die vorliegende Offenbarung beschäftigt sich mit der konstruktiven Umsetzung zur Verlagerung bzw. zum Antrieb des Förderelements beim Einspritzhub bzw. Einspritzvorgang.

Üblicherweise werden zur Umsetzung des Einspritzhubes linear wirkende Antriebsanordnungen, wie Spindelantriebe, verwendet. Diese Spindelantriebe bewirken eine axiale Relativverlagerung eines mit dem Förderelement verbundenen Aufnahmeelements, wie einer Einspritzbrücke, relativ zu einem mit der Plastifiziereinheit bzw. der stationären Formplatte verbundenen mittigen bzw. stationären Aufnahmeelement. Entsprechende Führungs- und Getriebeeinrichtungen für den Spindelantrieb sind am mittigen bzw. stationären Aufnahmeelement angeordnet. Gegenüberliegend wirken die Spindelantriebe mit komplementären Gewindeabschnitten am hinteren Aufnahmeelement bzw. an der Einspritzbrücke zusammen, sodass die Einspritzbrücke beim Einspritzvorgang bzw. Antrieb der Spindelantriebe zum mittigen Aufnahmeelement gedrückt wird. Zur Umsetzung des Spindelantriebs ist im Bereich des mittigen Aufnahmeelements bzw. der Plastifiziereinheit eine Vielzahl von Getriebeelementen, wie Antriebsriemen, erforderlich, wodurch die Zugänglichkeit von Bauteilen im Bereich der Plastifiziereinheit, beispielsweise des Zylindermoduls und der Schneckenkupplung, erschwert ist. Zudem unterliegen die mit dem Spindelantrieb zusammenwirkenden Getriebe- und Antriebsriemen einem nicht unerheblichen Verschleiß, einhergehend mit einem erhöhten Wartungsaufwand. Die Geräuschentwicklung der Maschine aufgrund der außenseitig freiliegenden Riemen- und Getriebeelemente ist hoch und kann nur durch zusätzliche Schutz- bzw. Eindämmungsmaßnahmen eingegrenzt werden. Eine derartige Spritzgießeinheit ist z.B. aus der US 5,129,808 A bekannt.

In der DE 195 31 328 A1 ist eine Einspritzeinheit für eine Kunststoff-Spritzgießmaschine mit einem Trägerblock offenbart, der eine Plastifiziereinheit mit einer Förderschnecke trägt. Ein den Trägerblock durchdringender Führungsbereich dient zugleich einer Einspritzbrücke zur Führung, an der ein Fördermittel gelagert ist und die mittels wenigstens eines Spindelantriebs auf den Trägerblock zu und von diesem weg bewegbar ist zur Relativbewegung des Fördermittels gegenüber der Plastifiziereinheit. Die Einspritzbrücke trägt einen Rotationsmotor zur Rotation des als Förderschnecke ausgebildeten Fördermittels, der zumindest mit einem Einspritzmotor für die Spindelantriebe baugleich ist.

Die DE 102 449 67 A1 beschreibt eine Einspritzeinrichtung mit einer Schnecke, welche in einem Massezylinder drehbar und längsverschiebbar gelagert ist. Durch einen Trichter der Schnecke zugeführter Kunststoff wird durch die Drehung der Schnecke plastifiziert und im Schneckenvorraum gesammelt, bis er durch Vorschieben der Schnecke in den nicht dargestellten Formhohlraum eingespritzt wird. Während des Dosierens und Einspritzens des Kunststoffes bleibt eine Trägerplatte unbeweglich, die mit dem Massezylinder verbunden ist. Das Ende der Schnecke ist in einer Druckplatte gelagert, an der sich die Schnecke abstützt. Die Druckplatte ihrerseits ist in der Trägerplatte über Spindeln abgestützt. Der Antrieb der Spindeln erfolgt über einen Keilriemen und Antriebsscheiben mittels eines Servomotors, der die Bewegung der Druckplatte mitmacht. Ebenfalls mit der Druckplatte verbunden ist der die Schnecke drehende Dosierantrieb, welcher über einen Keilriemen eine Antriebsscheibe antreibt.

Ausgehend von diesem Stand der Technik liegt der Erfindung die Aufgabe zugrunde, eine Spritzgießeinheit sowie eine Maschine mit einer derartigen Spritzgießeinheit zur Verfügung zu stellen, die einen kompakten bzw. raumsparenden und/oder konstruktiv einfachen bzw. teilereduzierten Aufbau und einen wartungsarmen, zuverlässigen - und letztlich anwenderfreundlichen - Betrieb ermöglichen.

Diese Aufgabe wird durch eine Spritzgießeinheit für eine Maschine zur Verarbeitung von Kunststoffen und anderer plastifizierbarer Massen mit den Merkmalen des Anspruches 1 sowie durch eine Maschine mit einer Spritzgießeinheit mit den Merkmalen des Anspruches 15 gelöst.

Hierzu ist die Spritzgießeinheit für eine Maschine zur Verarbeitung von Kunststoffen und anderer plastifizierbarer Massen, wie insbesondere eine Spritzgießmaschine, mit wenigstens einem Spindelantrieb mit wenigstens einer Spindel zur axialen Verlagerung bzw. eingerichtet für eine axiale Verlagerung des hinteren Aufnahmeelements zusammen mit dem Förderelement in Richtung zum mittigen Aufnahmeelement zur Umsetzung des Einspritzhubes bzw. eingerichtet zur Umsetzung des Einspritzhubes ausgerüstet. Erfindungsgemäß ist dabei vorgesehen, dass das hintere Aufnahmeelement gehäuseartig ausgebildet ist, wobei das Einspritzgetriebe und das Dosiergetriebe zumindest teilweise im hinteren Aufnahmeelement aufgenommen sind. Dabei ist die Spindel zumindest über eine Teilstrecke des Einspritzhubes innerhalb einer Ausnehmung des mittigen Aufnahmeelements verfahrbar aufgenommen.

Durch diese Ausgestaltung werden vorteilhaft die Voraussetzungen dafür geschaffen, die Baulänge bzw. axiale Erstreckung der Spritzgießeinheit einerseits zu minimieren, da die Breite bzw. die in Richtung der Spritzachse axiale Erstreckung des mittigen Aufnahmeelements über die Ausnehmung zur Aufnahme der axial bzw. translatorisch während des Einspritzhubes verschiebbaren Spindel genutzt wird. Die Ausnehmung ist insbesondere so angeordnet, dass die Länge bzw. Erstreckung der Ausnehmung entlang der Spritzgießachse als Eintauchtiefe für die translatorisch verschiebbare Spindel genutzt wird, was sich positiv auf die Gesamtbaulänge der Spritzgießeinheit auswirkt und eine kompakt bzw. raumsparend und/oder teilereduziert ausgebildete Spritzgießeinheit ermöglicht.

Die Spritzgießeinheit gestattet vorteilhaft eine verbesserte Zugänglichkeit technischer Komponenten im Bereich des mittigen Aufnahmeelements, da die Antriebs- und Getriebeelemente örtlich vom mittigen Aufnahmeelement bzw. von der Plastifiziereinheit entkoppelt bzw. angeordnet werden. Insbesondere ist durch den zumindest teilweisen Einbau des Einspritzgetriebes und des Dosiergetriebes in das gehäuseartige hintere Aufnahmeelement ein kompakter bzw. raumsparender Aufbau ermöglicht.

Zudem ist ein mit einer Spindel zusammenwirkender Einspritzmotor vorgesehen, der am hinteren Aufnahmeelement angeordnet ist. In diesem Zusammenhang hat es sich als vorteilhaft erwiesen, wenn der Einspritzmotor mittelbar über ein Einspritzgetriebe mit der Spindel in Wirkverbindung steht.

Einhergehend mit der verbessersten Zugänglichkeit bzw. kompakten Bauform ist auch eine hohe Modularität sämtlicher Hauptachsenantriebstechnologien, beispielsweise elektrischer oder hydraulischer Antriebstechnologien, gegeben. Der einfache Modultausch mit standardisierten Schnittstellen ist sowohl in der Erstmontage als auch bei der Wartung, beispielsweise im Service- oder im Nachrüstfall, entsprechend vorteilhaft. Insofern ist die Spritzgießeinheit ideal als kompakte Einheit bzw. als Modulbaustein und insofern bedienerfreundlich anwendbar.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere vorteilhafte Ausführungsvarianten der Erfindung aufgezeigt werden.

Vorzugsweise ist das mittige Aufnahmeelement gehäuseartig ausgebildet oder weist ein mittiges Aufnahmegehäuse auf, wobei die Ausnehmung im mittigen Aufnahmeelement oder im mittigen Aufnahmegehäuse ausgebildet ist. Insofern ist die Ausnehmung insbesondere im mittigen Aufnahmeelement bzw. Aufnahmegehäuse integriert. Dies trägt vorteilhaft zu einem kompakten Aufbau der Spritzgießeinheit bei.

Gemäß einer bevorzugten Ausführungsform ist vorgesehen, dass der Spindelantrieb eine mit der Spindel zusammenwirkende Spindelmutter aufweist, wobei die Spindelmutter an einer dem hinteren Aufnahmeelement zugewandten Seite des mittigen Aufnahmeelements angeordnet ist. Somit wird für den Spindelantrieb vorzugsweise ausschließlich der Bauraum zwischen dem mittigen und dem hinteren Aufnahmeelement ausgenutzt, was die kompakte Bauform weiterführend begünstigt.

Besonders bevorzugt ist die Ausnehmung in axialer Verlängerung bzw. koaxial zur Spindelmutter ausgebildet. Insbesondere tritt die Spindel vorzugsweise passgenau und/oder präzise in die Ausnehmung ein. Dies trägt vorteilhaft zu einer optimalen, vorzugsweise symmetrischen Übertragung der Einspritzkräfte bei.

Vorzugsweise ist die feststehende Spindelmutter am mittigen Aufnahmeelement, insbesondere stationär bzw. fest, gelagert ist und die wenigstens eine Spindel relativ zum mittigen Aufnahmeelement axial beweglich. Insbesondere bewirkt die Spindelmutter zusammen mit der Spindel eine Umsetzung des Einspritzvorgangs in vorzugsweise ziehender Verlagerung des hinteren Aufnahmeelements in Richtung zum mittigen Aufnahmeelement zur Aufbringung der Einspritzkraft bzw. zur Umsetzung des Einspritzhubes. Dadurch wird eine Doppelfunktion, nämlich ein robuster Kraftaufbau sowie die Schließung des Kraftrahmens, vorteilhaft umgesetzt.

Zudem bestehen erhebliche Längenvorteile durch die Anordnung der Spindelmutter am mittigen Aufnahmegehäuse, d.h. abgewandt bzw. im Windschatten der Befestigung der Plastifiziereinheit am mittigen Aufnahmeelement, insbesondere unter Ausnutzung des ohnehin zwischen dem mittigen und dem hinteren Aufnahmeelement zwangsläufig vorgesehenen Bau- bzw. Maschinenraums.

Vorzugsweise sind zwei beidseitig, vorzugsweise symmetrisch, zum Förderelement angeordnete Spindelantriebe mit einander gegenüberliegenden Spindeln vorgesehen, wobei jede Spindel zumindest über eine Teilstrecke des Einspritzhubes innerhalb einer zugeordneten Ausnehmung des mittigen Aufnahmeelements verfahrbar angeordnet ist. Dies gestattet vorteilhaft eine symmetrische bzw. kraftoptimierte Umsetzung des Einspritzhubes und letztlich einen schonenden und langfristig zuverlässigen Betrieb bei reduziertem Wartungsaufwand.

Vorzugsweise kann der Einspritzmotor an einer dem mittigen Aufnahmeelement zugewandten Seite des hinteren Aufnahmeelements und/oder unterhalb des Förderelements und/oder des Spindelantriebs angeordnet sein. Dadurch wird der axiale Bauraum bzw. Baubedarf, insbesondere die Bauhöhe, vorteilhaft reduziert.

Hierzu kann vorgesehen sein, dass der Dosierantrieb zentrisch und/oder koaxial zum Förderelement und/oder an einer dem mittigen Aufnahmeelement abgewandten Seite des hinteren Aufnahmeelements und/oder oberhalb des Einspritzmotors angeordnet ist. Dies ermöglicht vorteilhaft eine mechanisch günstige bzw. widerstandsfähige Anbindung sowie einen kostengünstigen Aufbau.

Alternativ kann jedoch bevorzugt vorgesehen sein, dass der Dosierantrieb exzentrisch zum Förderelement und/oder an einer dem mittigen Aufnahmeelement zugewandten Seite des hinteren Aufnahmeelements angeordnet ist. Dies ist einer kompakten Bauform weiterführend zuträglich, da vorteilhaft sämtliche Antriebskomponenten in einem zwischen dem mittigen und dem hinteren Aufnahmeelement ausgebildeten Bauraum aufgenommen werden können. Insofern ist an einer dem mittigen Aufnahmeelement abgewandten Seite des hinteren Aufnahmeelement keine Getriebe- und/oder Antriebseinrichtung angeordnet bzw. angebunden.

Vorzugsweise ist diese dem mittigen Aufnahmeelement abgewandte Seite des hinteren Aufnahmeelements im Wesentlichen vollständig glatt und/oder geschlossen und/oder frei von vorstehenden technischen Bauteilen bzw. Komponenten ausgebildet.

Vorzugsweise weist das hintere Aufnahmeelement wenigstens ein Stützelement zur Abstützung auf dem Maschinenständer auf, vorzugsweise wobei das Stützelement zur Wirkverbindung mit einer insbesondere sich entlang der Spritzachse erstreckenden Führungsschiene eingerichtet ist. Insbesondere sind zwei, quer zur Spritzachse einander gegenüberliegende, Stützelemente vorgesehen, sodass das hintere Aufnahmeelement bzw. das hintere Aufnahmegehäuse beidseitig auf den Führungsschienen abgestützt ist.

Die Lagerung auf einem Doppelschienenlinearsystem bzw. auf zwei Führungsschienen hat sich als besonders vorteilhaft erwiesen, da die eingeleiteten Drehimpulse robust aufgenommen werden und eine präzise bzw. verwindungsarme translatorische Bewegung des hinteren Aufnahmeelements umgesetzt wird.

In einem bevorzugten Ausführungsbeispiel bilden das mittige Aufnahmeelement und das hintere Aufnahmeelement mit dem wenigstens einen Spindelantrieb, vorzugsweise mit den zwei Spindelantrieben, einen Kraftrahmen für den Einspritzhub, und zwar nicht nur zur Übertragung der Bewegung und der Kraft, sondern auch im Lastbereich. Durch diese Anordnung kann vorteilhaft auf weitere Komponenten zum Schließen des Kraftrahmens verzichtet werden.

Einspritzgetriebe und Dosiergetriebe sind insbesondere als Stirnradgetriebe mit wenigstens einem Stirnrad ausgeführt, was vorteilhaft im Hinblick auf einen geringen Verschleiß sowie eine verringerte Geräuschentwicklung bzw. Baulänge ist. Zudem können die Getriebe eine Ölfüllung aufweisen, was einen wartungsarmen und zuverlässigen Betrieb ermöglicht. Ferner können die Getriebe wenigstens ein Mittel zur Temperaturüberwachung und/oder wenigstens ein schrägverzahntes Stirnrad aufweisen, was einen zuverlässigen bzw. wartungsarmen und/oder geräuschminimierten Betrieb ermöglicht.

Besonders bevorzugt ist der Einspritzmotor dazu ausgebildet, beide Spindeln über ein gemeinsames Stirnradgetriebe vorteilhaft platzsparend anzutreiben. Das Stirnradgetriebe ist vorzugsweise symmetrisch aufgebaut.

Das Stirnradgetriebe weist bevorzugt eine Antriebswelle mit einem Stirnrad auf, über das beide Spindeln als Abtriebswelle mittelbar oder unmittelbar angetrieben werden. Das Stirnrad der Antriebswelle steht vorzugsweise mit Stirnrädern von insgesamt zwei Zwischenrädern in unmittelbarem Wirkeingriff. Jedes Stirnrad der beiden Zwischenräder steht bevorzugt mit jeweils einem Stirnrad einer Spindel als Abtriebswelle in Wirkeingriff. Es ist auch möglich, mehrere Zwischenräder vorzusehen. Durch den symmetrischen Aufbau kann vorteilhaft eine präzise und schlupffreie Übertragung der Antriebsleistung vom Einspritzmotor auf beide Spindelantrieb bzw. Spindeln bei einem einfachen Aufbau des Getriebes ermöglicht werden. Gleichzeitig kann eine wenigstens zweistufige Über- oder Untersetzung erzielt werden.

Die obige Aufgabe wird auch durch eine Maschine zur Verarbeitung von Kunststoffen und anderer plastifizierbarer Massen, insbesondere eine Spritzgießmaschine, mit einem Maschinenständer und einer darauf angeordneten Spritzgießeinheit gelöst, die wie vorstehend beschrieben und aufgebaut ist und die genannten Vorteile aufweist.

Weitere Vorteile ergeben sich aus den Unteransprüchen und der nachfolgenden Beschreibung bevorzugter Ausführungsbeispiele.

### Kurzbeschreibung der Figuren

Im Folgenden wird die Erfindung anhand von in den beigefügten Figuren dargestellten Ausführungsbeispielen näher erläutert. Es zeigen
- Fig.1: eine dreidimensionale Ansicht auf einen Teil einer Maschine zur Verarbeitung von Kunststoffen und anderer plastifizierbarer Massen mit einer Spritzgießeinheit in einem ersten Ausführungsbeispiel,
- Fig. 2: die Spritzgießeinheit aus Fig. 1 mit einem mittigen und einem hinteren Aufnahmeelement sowie Spindelantrieben zur Verlagerung des hinteren Aufnahmeelements relativ zum mittigen Aufnahmeelement,
- Fig. 2a: einen vergrößerten, teilweise frei geschnittenen Ausschnitt A aus Fig. 2 betreffend die Anordnung des Spindelantriebs im hinteren Aufnahmeelement,
- Fig. 2b: eine schematische Schnittdarstellung entlang der Schnittebene B-B in Fig. 2,
- Fig. 3, 3a: eine horizontale Schnittansicht gemäß Fig. 1 in Höhe der Spindelantriebe mit einer Ausrichtung des mittigen Aufnahmeelements relativ zum hinteren Aufnahmeelement vor Beginn und nach Beendigung des Einspritzhubes,
- Fig. 4: eine dreidimensionale Ansicht auf einen Teil einer Maschine zur Verarbeitung von Kunststoffen und anderer plastifizierbarer Massen mit einer Spritzgießeinheit in einem zweiten Ausführungsbeispiel,
- Fig. 4a: einen vergrößerten, teilweise frei geschnittenen Ausschnitt C aus Fig. 4 betreffend die Anordnung des Spindelantriebs im hinteren Aufnahmeelement,
- Fig. 4b: eine schematische Schnittdarstellung entlang der Schnittebene D-D in Fig. 4, und
- Fig. 5, 5a: eine horizontale Schnittansicht gemäß Fig. 4 mit einer Ausrichtung des mittigen Aufnahmeelements relativ zum hinteren Aufnahmeelement vor Beginn und nach Beendigung des Einspritzhubes .

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht. Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

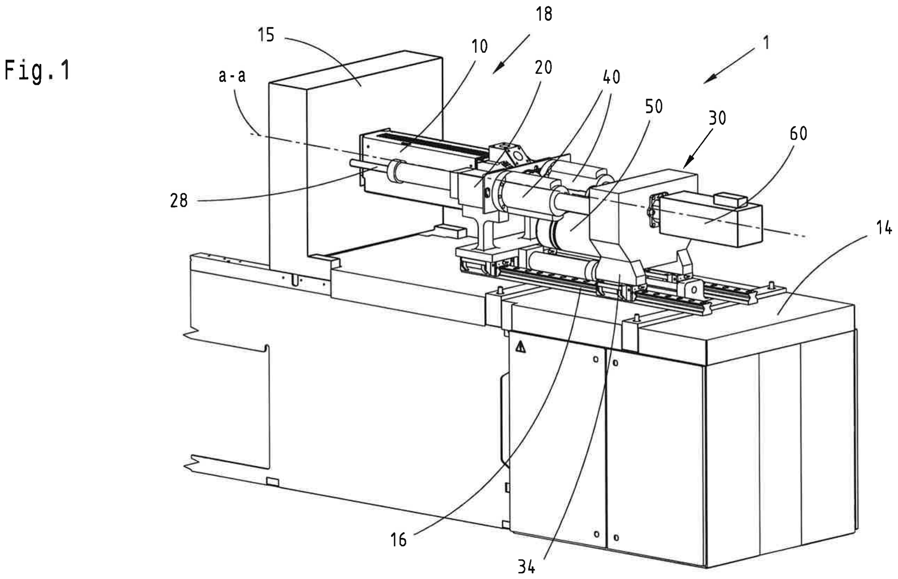

Fig. 1, 2 und 4 zeigen eine perspektivische Ansicht eines Teils einer Maschine zur Verarbeitung von Kunststoffen und anderer plastifizierbarer Massen, wie insbesondere pulverförmige und/oder keramische Massen, in einem ersten und zweiten Ausführungsbeispiel, die sich durch unterschiedliche Antriebsanordnungen unterscheiden, worauf noch näher eingegangen wird. Es kann sich dabei um eine Kunststoff-Spritzgießmaschine handeln. Erkennbar ist eine auf einem Maschinenständer 14 angeordnete Spritzgießeinheit 1, die an einer Aufnahmeplatte 15 bzw. einem stationären Formträger der Maschine festsetzbar ist. Bei dieser Aufnahmeplatte 15 handelt es sich im Ausführungsbeispiel um die feststehende bzw. stationäre Formaufspannplatte bzw. den stationären Formträger einer im Übrigen zeichnerisch nicht dargestellten Formschließeinheit einer Spritzgießmaschine.

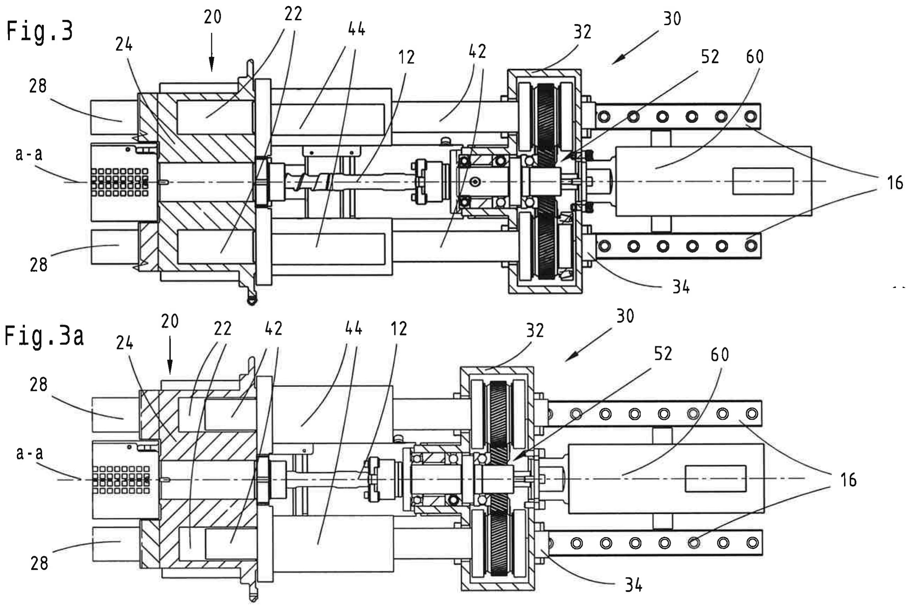

Aufbau und Betrieb einer Spritzgießmaschine sind dem Fachmann grundsätzlich bekannt. Einer Spritzgießeinheit 1 der Maschine werden Kunststoffe oder andere plastifizierbare Materialien zugeführt, die in einem Plastifizierzylinder 18 gemischt, plastifiziert und homogenisiert werden. Hierzu ist im Plastifizierzylinder 18 ein in Fig. 3 und Fig. 3a zeichnerisch dargestelltes Förderelement 12, beispielsweise eine Förderschnecke oder ein anderes geeignetes Fördermittel, vorgesehen. Während des Plastifizierungsvorgangs wird im Falle einer Förderschnecke diese durch einen Dosierantrieb 60 rotiert, wobei vor dem Förderelement 12 bzw. der Förderschnecke plastifiziertes Material aufdosiert wird. Im Anschluss wird durch eine Axialbewegung des Förderelements 12 entlang einer Spritzachse a-a, die durch wenigstens einen Spindelantrieb 40 erfolgt, das plastifizierte Material in einen Formhohlraum einer zeichnerisch nicht dargestellten Spritzgießform eingespritzt, die sich in den Fig. 1, Fig. 2 und Fig. 4 auf der linken Seite auf der Rückseite der Aufnahmeplatte 15 befinden würde. In diesem Moment ist die Spritzgießform durch die Formschließeinheit geschlossen. Sobald das eingespritzte plastifizierte Material im Formhohlraum ausgehärtet ist, wird mittels der Formschließeinheit die Spritzgießform wieder geöffnet, so dass das Spritzteil entnommen werden kann. Dieser Prozess erfolgt zyklisch.

In Fig. 1, 2 und 4 ist ein mittiges Aufnahmeelement 20 vorgesehen, über welches die Plastifiziereinheit 10 an dem Maschinenständer 14 der Maschine gehalten ist. Das mittige Aufnahmeelement 20 ist über eine Abstützung, im Ausführungsbeispiel über Stellelemente 26, auf dem Maschinenständer 14 abgestützt. Insbesondere kann das mittige Aufnahmeelement 20 relativ zum Maschinenständer 14 fixiert bzw. stationär gelagert sein.

In den Figuren links von dem mittigen Aufnahmeelement 20 ist die Plastifiziereinheit 10 einschließlich Plastifizierzylinder angeordnet und liegt mit einer zeichnerisch nicht dargestellten Düse an der Aufnahmeplatte 15, genauer gesagt über eine Ausnehmung in der Aufnahmeplatte 15 an der Einspritzöffnung der Spritzgießform an. Diese Darstellung entspricht einem Betriebszustand zur Herstellung von Spritzteilen.

Das mittige Aufnahmeelement 20 ist über mehrere Holme bzw. Führungssäulen, im Ausführungsbeispiel über zwei Holme 28, mit der Aufnahmeplatte 15, insbesondere lösbar, verbunden. Diese Holme können als eine - z.B. elektromechanisch oder hydraulisch angetriebene - Einheit zum Anlegen der Plastifiziereinheit und insbesondere der Düse an der Aufnahmeplatte 15 vorgesehen sein.

Rückseitig, das heißt in den Figuren auf der rechten Seite der Spritzgießeinheit 1 bzw. an einer der Aufnahmeplatte 15 bzw. der Plastifiziereinheit 10 abgewandten Seite des mittigen Aufnahmeelements 20, befindet sich ein gemeinsam mit dem Förderelement 12 bewegbares hinteres Aufnahmeelement 30. Das hintere Aufnahmeelement 30 ist in axialer Richtung bezogen auf die Spritzachse a-a ausgehend von der Aufnahmeplatte 15 hinter dem mittigen Aufnahmeelement 20 angeordnet. Mit anderen Worten ist das mittige Aufnahmeelement 20 somit zwischen der Aufnahmeplatte 15 bzw. dem stationären Formträger und dem hinteren Aufnahmeelement 30 angeordnet.

Das hintere Aufnahmeelement 30 ist relativ zum mittigen Aufnahmeelement 20 und/oder dem Maschinenständer 14 entlang der Spritzachse a-a verlagerbar. In den in den Figu-ren gezeigten Ausführungsbeispielen ist das hintere Aufnahmeelement 30 relativ zum mittigen Aufnahmeelement 20 linear verfahrbar bzw. verschiebbar. Wie in den Figuren gezeigt, kann das hintere Aufnahmeelement 30 über wenigstens ein Stützelement 34 auf dem Maschinenständer 14 abgestützt sein. Das Stützelement 34 kann zur Wirkverbindung mit einer insbesondere sich entlang der Spritzachse a-a erstreckenden Führungsschiene 16 eingerichtet sein.

Gemäß Fig. 1, 2 und 4 ist das hintere Aufnahmeelement 30 über zwei vorzugsweise gegenüberliegend und/oder beidseitig angeordnete Stützelemente 34 auf zwei parallel zueinander verlaufenden Führungsschienen 16 entlang der Spritzachse a-a verfahrbar abgestützt. Grundsätzlich sind aber auch andere Führungssysteme z.B. durch Holme oder an andere Komponenten denkbar, welche die technischen Anforderungen erfüllen.

Zur axialen Verlagerung des hinteren Aufnahmeelements 30 relativ zum mittigen Aufnahmeelement 20 weist die Spritzgießeinheit 1 wenigstens einen Spindelantrieb 40 auf. Der Spindelantrieb 40 weist vorzugsweise wenigstens eine Spindel 42 und wenigstens eine mit der Spindel 42 in kämmendem Eingriff stehende Spindelmutter 44 auf. In den Figuren ist die Spindel 42 um ihre Spindelachse rotierbar und entlang der Spritzachse a-a relativ zum mittigen Aufnahmeelement 20 axial beweglich gelagert. Die Spindel 42 ist um ihre Spindelachse rotierbar an dem mittigen Aufnahmeelement 20 gehalten und in Richtung der Spritzachse a-a an dem hinteren Aufnahmeelement 30 axial fixiert und rotierend gelagert.

Die Spindelmutter 44 ist feststehend am mittigen Aufnahmeelement 20 gelagert. Die Spindelmutter 44 ist insbesondere an einer dem hinteren Aufnahmeelement 30 zugewandten Seite des mittigen Aufnahmeelements 20 angeordnet bzw. befestigt, beispielsweise lösbar und/oder über eine Schraubverbindung. Es ist auch eine umgekehrte Anordnung denkbar, bei der die Spindelmutter 44 rotierbar und die Spindel 42 feststehend gelagert ist, solange dadurch gewährleistet ist, dass die wenigstens eine Spindel 42 zumindest über eine Teilstrecke eines Einspritzhubes innerhalb einer Ausnehmung 22 des mittigen Aufnahmeelements 20 verfahrbar aufgenommen ist.

Durch den Spindelantrieb 40 erfolgt bei dessen Betätigung eine axiale Verlagerung des hinteren Aufnahmeelements 30 zusammen mit dem Förderelement 12 in Richtung zum mittigen Aufnahmeelement 20, um einen Einspritzhub zu realisieren. Der Spindelantrieb 40 ist somit für die Umsetzung des Einspritzhubes durch eine Verlagerung des hinteren Aufnahmeelements 30 in Richtung zum mittigen Aufnahmeelement 20 eingerichtet. Dabei wird beim Einspritzhub das hintere Aufnahmeelement 30 zusammen mit dem Förderelement 12 durch den Spindelantrieb 40 in Richtung auf das mittige Aufnahmeelement 20 gezogen.

Die Spritzgießeinheit 1 weist einen mit dem Spindelantrieb 40 und insbesondere der Spindel 42 zusammenwirkenden Einspritzmotor 50 auf. Der Einspritzmotor 50 ist somit für die motorische Verstellung des hinteren Aufnahmeelements 30 relativ zum mittigen Aufnahmeelement 20 eingerichtet. Wie Fig. 1, 2 und 4 zeigen, ist der Einspritzmotor 50 insbesondere stationär zur gemeinsamen Bewegung mit dem hinteren Aufnahmeelement 30 angeordnet. Der Einspritzmotor 50 kann daher zusammen mit dem hinteren Aufnahmeelement 30 entlang der Spritzachse a-a verfahrbar sein.

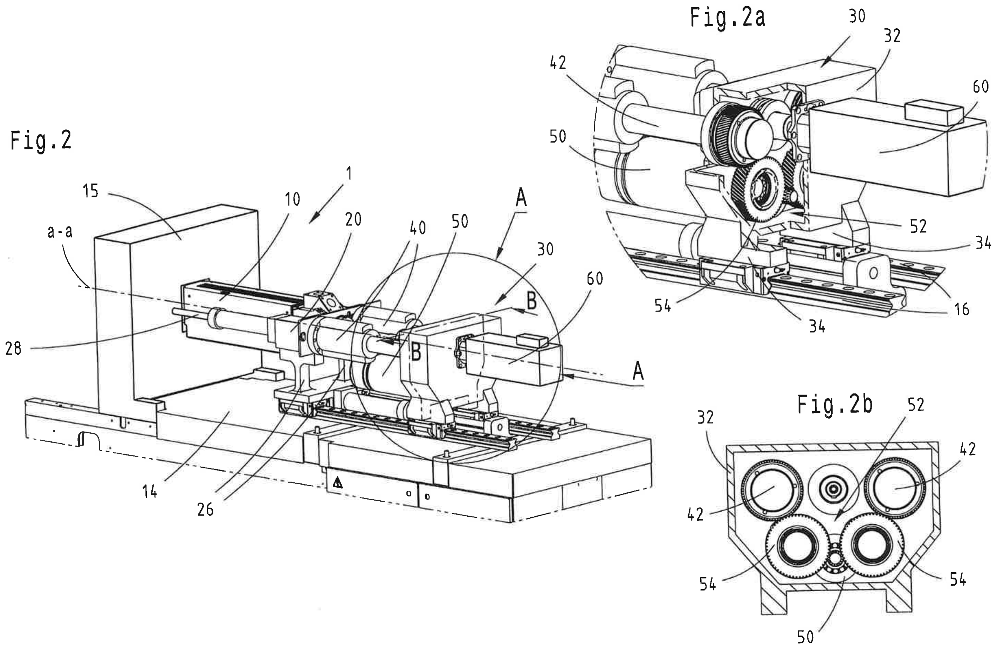

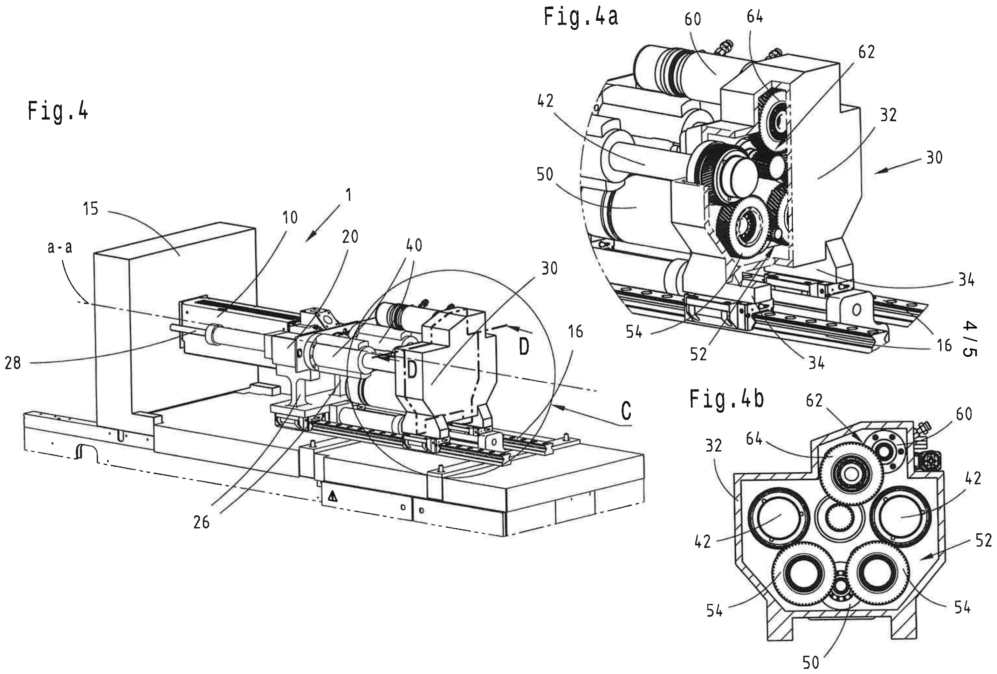

Der Einspritzmotor 50 kann, wie Fig. 2 und 4 beispielhaft zeigen, an einer dem mittigen Aufnahmeelement 20 zugewandten Seite des hinteren Aufnahmeelements 30 angeordnet sein. Alternativ oder zusätzlich kann der Einspritzmotor 50 unterhalb des Förderelements 12 und/oder des Spindelantriebs 40 angeordnet sein, wodurch eine besonders kompakte Bauweise der Spritzgießeinheit 1 erreicht werden kann.

Am hinteren Aufnahmeelement 30 ist des Weiteren ein vorzugsweise elektromechanischer Dosierantrieb 60 angeordnet. Der Dosierantrieb 60 ist für ein Drehen des Förderelements 12 beim Dosieren des plastifizierbaren Materials eingerichtet. Der Dosierantrieb 60 ist somit zusammen mit dem hinteren Aufnahmeelement 30 entlang der Spritzachse a-a relativ zum mittigen Aufnahmeelement 20 verfahrbar.

In den in den Figuren dargestellten Ausführungsbeispielen bilden vorzugsweise das hintere Aufnahmeelement 30, der Dosierantrieb 60, der Einspritzmotor 50, das Förderelement 12 und die Spindel 42 eine relativ zum mittigen Aufnahmeelement 20 verfahrbare Einheit aus.

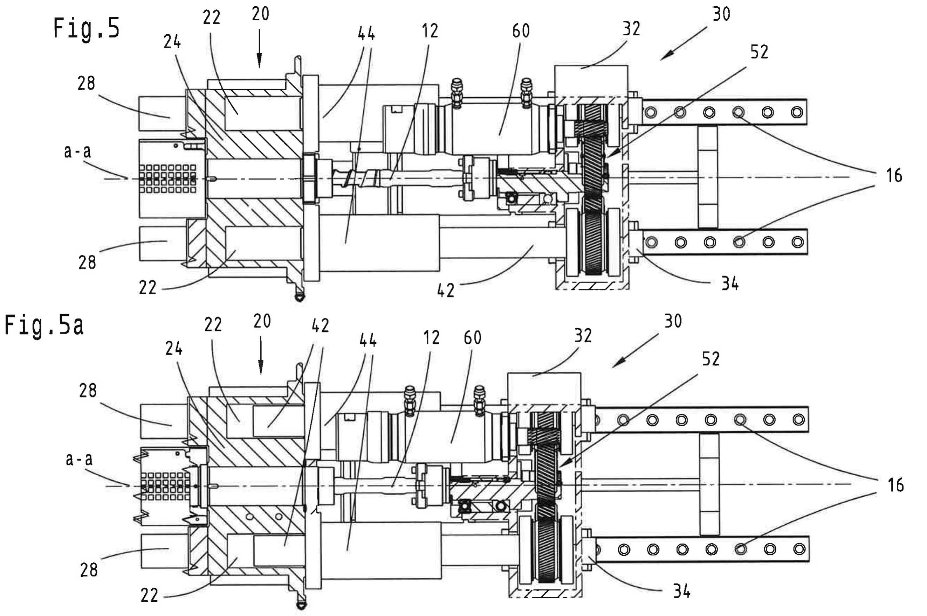

Den Ausführungsbeispielen ist gemeinsam, dass die Spindel 42 gemäß Fig. 3, 3a bzw. Fig. 5, 5a zumindest über eine Teilstrecke des Einspritzhubes innerhalb einer Ausnehmung 22 des mittigen Aufnahmeelements 20 verfahrbar aufgenommen ist. Durch diese Ausgestaltung kann die Baulänge bzw. axiale Erstreckung der Spritzgießeinheit 1 minimiert werden, da die Breite bzw. axiale Erstreckung entlang der Spritzachse a-a des mittigen Aufnahmeelements 20 über die Ausnehmung 22 zur Aufnahme der axial bzw. translatorisch entlang der Spritzachse a-a während des Einspritzhubes verschiebbaren Spindel 42 genutzt wird.

Die Anordnung ermöglicht zudem eine verbesserte Zugänglichkeit technischer Komponenten im Bereich des mittigen Aufnahmeelements 20, da die Antriebs- und Getriebeelemente örtlich vom mittigen Aufnahmeelement 20 bzw. von der Plastifiziereinheit 10 entkoppelt werden. Auf diese Weise können Wartungs- und/oder Reparaturarbeiten in besonders einfacher und schneller Weise durchgeführt werden.

Die Ausnehmung 22 kann insbesondere derart ausgebildet sein, dass die Erstreckung der Ausnehmung 22 als Eintauchtiefe für die translatorisch verschiebbare Spindel 42 beim Einspritzhub genutzt wird, was sich positiv auf die Gesamtbaulänge der Spritzgießeinheit 1 auswirkt.

Die Ausnehmung 22 ist vorzugsweise in axialer Verlängerung bzw. koaxial zur Spindelmutter 44 ausgebildet. Insbesondere kann sich die Ausnehmung entlang der Spritzachse a-a erstrecken.

Die Ausnehmung 22 kann das mittige Aufnahmeelement 20 vollständig durchdringen bzw. als Durchbrechung ausgebildet oder, wie in Fig. 3 und Fig. 5 gezeigt, als Sackloch bzw. sacklochartig und/oder endseitig geschlossen ausgebildet sein. Die Ausnehmung 22 erstreckt sich dann ausgehend von der dem hinteren Aufnahmeelement 30 zugeordneten Seite des mittigen Aufnahmeelements 20 in Richtung zur Aufnahmeplatte 15.

Die Erstreckung der Ausnehmung 22 entlang der Spritzachse a-a entspricht wenigstens 50 %, vorzugsweise wenigstens 60 %, weiter vorzugsweise wenigstens 70 %, der axialen Erstreckung der Spindelmutter 44. Dies ermöglicht eine mechanisch besonders stabile Umsetzung des Einspritzhubes bei gleichzeitig reduzierter axialer Baulänge.

Die Erstreckung der Ausnehmung 22 entlang der Spritzachse a-a kann wenigstens 50 %, vorzugsweise wenigstens 60 %, weiter vorzugsweise wenigstens 70 %, der Erstreckung des mittigen Aufnahmeelements 20 entsprechen. Ebenso ist denkbar, dass die Erstreckung der Ausnehmung 22 entlang der Spritzachse a-a auch bis zu 100%, vorzugsweise wenigstens 80%, weiter vorzugsweise wenigstens 90%, der Erstreckung des mittigen Aufnahmeelements 20 entspricht, solange der Einspritzhub zwischen der Ausnehmung 22 und der vorzugsweise feststehenden Aufnahmeplatte 15 unterzubringen ist. Dadurch wird die Erstreckung der Ausnehmung 22 vorzugsweise vollständig zur Umsetzung des Einspritzhubes bzw. Reduzierung des axialen Bauraums genutzt.

In Fig. 3 und 5 ist eine Schnittansicht der Spritzgießeinheit 1 vor Beginn des Einspritzhubes und in Fig. 3a und 5a nach Beendigung des Einspritzhubes gezeigt. Gemäß Fig. 3 und 5 kann die Spindel 42 bereits vor dem Einspritzhub abschnittsweise innerhalb der Ausnehmung 22 angeordnet sein. Es ist auch möglich, dass die Spindel 42 vor dem Einspritzhub noch nicht in die Ausnehmung 22 hineinragt.

Gemäß Fig. 3a und 5a zeigen, kann sich die Spindel 42 über wenigstens 50%, vorzugsweise wenigstens 60 %, weiter vorzugsweise wenigstens 70 %, der Länge der Ausnehmung 22 erstrecken, insbesondere zumindest nach Beendigung des Einspritzhubes. Unter dem Begriff "Länge" ist vorliegend die Erstreckung der Ausnehmung 22 entlang der Spritzachse a-a zu verstehen.

Die Spindel 42 kann somit über den gesamten Einspritzhub in der Ausnehmung 22 verfahrbar aufgenommen sein. Es ist auch möglich, dass die Spindel 42 während des Einspritzhubs teilweise oder abschnittsweise in die Ausnehmung 22 eingeführt wird.

Das mittige Aufnahmeelement 20 kann gehäuseartig ausgebildet sein oder ein mittiges Aufnahmegehäuse 24 aufweisen. Die Ausnehmung 22 ist dann im mittigen Aufnahmeelement 20 oder im mittigen Aufnahmegehäuse 24 ausgebildet.

Wie die Figuren zeigen, sind vorzugsweise zwei Spindelantriebe 40 mit einander gegenüberliegenden Spindeln 42 vorgesehen. Die Spindelantriebe 40 können beidseitig, vorzugsweise symmetrisch, zum Förderelement 12 angeordnet sein, wodurch ein symmetrischer Aufbau und ein gleichmäßiger Kraftfluss realisiert werden können. Das mittige Aufnahmeelement 20 weist insbesondere zwei Ausnehmungen 22 auf, wobei jeder Ausnehmung 22 ein Spindelantrieb 40 bzw. eine Spindel 42 mit damit zusammenwirkender Spindelmutter 44 zugeordnet ist. Jede Spindel 42 ist zumindest über eine Teilstrecke des Einspritzhubes innerhalb einer zugeordneten Ausnehmung 22 des mittigen Aufnahmeelements 20 verfahrbar angeordnet. In der Regel tauchen die Spindeln 42 auf beiden Seiten mit dem gleichen Maß in die jeweilige Ausnehmung 22 ein.

Gemäß Fig 2a, 2b und Fig. 4, 4b steht der Einspritzmotor 50 mittelbar über ein Einspritzgetriebe 52 mit der Spindel 42 in Wirkverbindung. Insbesondere kann das Einspritzgetriebe 52 als Untersetzungsgetriebe ausgebildet sein, um ein hohes Drehmoment erzeugen bzw. mit einer geeigneten Motorgröße arbeiten zu können. Alternativ ist auch eine direkte Wirkverbindung zwischen dem Einspritzmotor 50 und der Spindel 42 denkbar.

Das Einspritzgetriebe 52 kann in vorteilhafter Weise als Stirnradgetriebe ausgebildet sein. Wie Fig. 3, 3a beispielhaft zeigen, weist ein entsprechend als Stirnradgetriebe ausgebildetes Einspritzgetriebe 52 einen geringen Bauraumbedarf entlang der Spritzachse a-a auf. Stirnradgetriebe weisen einen besonders hohen Wirkungsgrad auf. Zudem weisen Stirnradgetriebe einen besonders einfachen Aufbau auf, da nur wenig bewegliche Teile zum Einsatz kommen. Außenverzahnte Stirnräder sind zudem einfach herzustellen, wodurch eine besonders kostengünstige Herstellung des Einspritzgetriebe 52 ermöglicht wird. Solch ein Getriebe ist wartungsarm, einfach zu temperieren und geräuscharm. Grundsätzlich ist aber eine andere Kraftübertragung und/oder Übersetzung z.B. mittels eines Riemen- oder Kettentriebs denkbar.

Das Einspritzgetriebe 52 weist gemäß Fig. 2a, 2b im Ausführungsbeispiel wenigstens ein Zwischenrad 54 auf, wodurch eine präzise und schlupffreie Übertragung der Antriebsleistung vom Einspritzmotor 50 auf den wenigstens einen Spindelantrieb 40, vorzugsweise auf beide, Spindelantriebe 40 bzw. Spindeln 42 ermöglicht wird.

Beim dargestellten und bevorzugten Ausführungsbeispiel weist das Einspritzgetriebe 52 zwei insbesondere symmetrisch und/oder beidseitig mit einem Antriebsritzel des Einspritzmotors 50 zusammenwirkende Zwischenräder 54 bzw. Stirnräder auf, vorzugsweise wobei jedes Zwischenrad 54 bzw. Stirnrad wiederrum mit einer zugeordneten Spindel 42 bzw. einem Antriebsritzel der zugeordneten Spindel 42 in Wirkverbindung steht.

Vorzugsweise sind die Stirnräder des als Stirnradgetriebes ausgebildeten Einspritzgetriebes 52 als schrägverzahnte Zahnräder ausgebildet, wodurch ein besonders leichtgängiger und/oder geräuscharmer Betrieb und ein gleichmäßiges Anfahren des Einspritzgetriebes 52 ermöglicht wird.

Wie Fig. 2a bis Fig. 5 weiterhin zeigen, ist das hintere Aufnahmeelement 30 gehäuseartig ausgebildet. Das Einspritzgetriebe 52 ist zumindest teilweise im hinteren Aufnahmeelement 30 angeordnet oder aufgenommen, insbesondere eingekapselt. Alternativ kann das hintere Aufnahmeelement 30 ein hinteres Aufnahmegehäuse 32 aufweisen, wobei das Einspritzgetriebe 52 zumindest teilweise im hinteren Aufnahmeelement 30 oder im hinteren Aufnahmegehäuse 32 aufgenommen, insbesondere eingekapselt ist. Das hintere Aufnahmeelement 30 ist dann als Multifunktionsteil ausgebildet, das neben der Abstützung auf dem Maschinenbett 14 auch die Aufgabe der Aufnahme des Einspritzgetriebes 52 zumindest teilweise übernimmt, wodurch die Baulänge der Spritzgießeinheit 1 weiter reduziert werden kann.

Das Einspritzgetriebe 52 und/oder das hintere Aufnahmegehäuse 32 kann ein Ölfüllung aufweisen oder ölgefüllt sein, um einen besonders wartungsarmen Betrieb des Einspritzgetriebes 52 zu ermöglichen.

In der in Fig. 1 bis 3a gezeigten Ausführungsform kann der Dosierantrieb 60 zentrisch und/oder koaxial zum Förderelement 12 in der Spritzachse a-a angeordnet sein. Besonders bevorzugt ist der Dosierantrieb 60 an einer dem mittigen Aufnahmeelement 20 abgewandten Seite des hinteren Aufnahmeelements 30 angeordnet.

Alternativ oder zusätzlich kann der Dosierantrieb 60 oberhalb des Einspritzmotors 50 angeordnet sein, wie in beiden in Fig. 1 bis Fig. 3a einerseits und in Fig. 4 bis Fig. 5a andererseits dargestellten Ausführungsformen gezeigt ist.

In der in Fig. 4 bis 5a gezeigten Ausführungsform ist der Dosierantrieb 60 exzentrisch zum Förderelement 12 und/oder an einer dem mittigen Aufnahmeelement 20 zugewandten Seite des hinteren Aufnahmeelements 30 angeordnet. Der Dosierantrieb 60 ist in der zweiten Ausführungsform unmittelbar oberhalb des Einspritzmotors 50 angeordnet.

Gemäß der in Fig. 4 bis Fig. 5b gezeigten zweiten Ausführungsform ist der Dosierantrieb 60 vorzugsweise über ein Dosiergetriebe 62 mit dem Förderelement 12 wirkverbunden. Das Dosiergetriebe 62 ist zumindest teilweise im hinteren Aufnahmeelement 30 aufgenommen, wodurch - insbesondere in Verbindung mit der Anordnung des Dosierantriebs 60 - eine besonders geringe Baulänge der Spritzgießeinheit erreicht werden kann.

Das Dosiergetriebe 62 ist vorzugsweise als Stirnradgetriebe ausgebildet, wodurch eine geringe Baulänge entlang der Spritzachse a-a realisiert werden kann. Gleichzeitig weisen Stirnradgetriebe einen besonders hohen Wirkungsgrad auf. Stirnradgetriebe weisen zudem eine besonders einfache Bauweise auf, da nur wenig bewegte Teile zum Einsatz kommen. Außenverzahnte Stirnräder sind einfach herzustellen, wodurch eine besonders kostengünstige Herstellung des Getriebes ermöglicht wird. Gleichzeitig kann ein besonders leiser Lauf und ein gleichmäßiges Anfahren des Dosiergetriebes ermöglicht werden.

Das Dosiergetriebe 62 kann als Untersetzungsgetriebe ausgebildet sein, um ein besonders hohes Drehmoment erzeugen zu können.

Das Dosiergetriebe 62 weist, wie Fig. 4 beispielhaft zeigt, wenigstens ein Zwischenrad 64 auf, wodurch eine präzise und schlupffreie Übertragung der Antriebsleistung vom Dosierantrieb 50 auf das Förderelement 12 in einer wenigstens zweistufigen Unter- oder Übersetzung ermöglicht wird.

Das Dosiergetriebe 62 und/oder das hintere Aufnahmegehäuse 32 können eine Ölfüllung aufweisen oder mit Öl gefüllt sein, um einen besonders leichtgängigen und/oder wartungsarmen Betrieb des Dosiergetriebes 62 zu ermöglichen.

In einem bevorzugten Ausführungsbeispiel bilden das mittige Aufnahmeelement 20 und das hintere Aufnahmeelement 30 mit dem wenigstens einen Spindelantrieb 40, vorzugsweise mit den zwei Spindelantrieben 40, einen Kraftrahmen für den Einspritzhub, und zwar nicht nur zur Übertragung der Bewegung und der Kraft, sondern auch im Lastbereich. Durch diese Anordnung kann vorteilhaft auf weitere Komponenten zum Schließen des Kraftrahmens verzichtet werden.

Bevorzugt ist die dem mittigen Aufnahmeelement 20 abgewandte Seite des hinteren Aufnahmeelements 30 im Wesentlichen vollständig geschlossen und/oder frei von vorstehenden technischen Bauteilen oder Komponenten ausgebildet. Dies ist ebenfalls vorteilhaft für eine kompakte Bauform.

Die Maschine zur Verarbeitung von Kunststoffen und anderer plastifizierbarer Massen, insbesondere die Spritzgießmaschine, selbst weist den Maschinenständer 14 und eine darauf über das mittige Aufnahmeelement 20 und das hintere Aufnahmeelement 30 angeordneten Spritzgießeinheit 1 auf. Die Plastifiziereinheit 10 der Spritzgießeinheit 1 ist an einer vorzugsweise feststehenden Aufnahmeplatte 15 der Maschine lösbar festgesetzt. Dabei ist die Spritzgießeinheit 1 zur Erzielung der genannten Vorteile auch hinsichtlich der Maschine selbst wie beschrieben ausgebildet.

### Bezugszeichenliste

- 1: Spritzgießeinheit
- 10: Plastifiziereinheit
- 12: Förderelement
- 14: Maschinenständer
- 15: Aufnahmeplatte
- 16: Führungsschiene
- 18: Plastifizierzylinder
- 20: mittiges Aufnahmeelement
- 22: Ausnehmung
- 24: mittiges Aufnahmegehäuse
- 26: Stellelement
- 28: Holm
- 30: hinteres Aufnahmeelement
- 32: hinteres Aufnahmegehäuse
- 34: Stützelement
- 40: Spindelantrieb
- 42: Spindel
- 44: Spindelmutter
- 50: Einspritzmotor
- 52: Einspritzgetriebe
- 54: Zwischenrad
- 60: Dosierantrieb
- 62: Dosiergetriebe
- 64: Zwischenrad
- a-a: Spritzachse

## Patentansprüche

1. Spritzgießeinheit (1) für eine Maschine zur Verarbeitung von Kunststoffen und anderer plastifizierbarer Massen, insbesondere für eine Spritzgießmaschine, mit
- einer Plastifiziereinheit (10), in der ein Förderelement (12) zum Fördern des plastifizierbaren Materials entlang einer Spritzachse (a-a) vorgesehen ist,
- einem mittigen Aufnahmeelement (20), über welches die Plastifiziereinheit (10) an einem Maschinenständer (14) der Maschine gehalten ist,
- einem hinteren Aufnahmeelement (30), das relativ zum mittigen Aufnahmeelement (20) entlang der Spritzachse (a-a) verlagerbar ist,
- wenigstens einem Spindelantrieb (40) mit wenigstens einer Spindel (42) zur axialen Verlagerung des hinteren Aufnahmeelements (30) zusammen mit dem Förderelement (12) in Richtung zum mittigen Aufnahmeelement (20) zur Umsetzung eines Einspritzhubes, wobei die wenigstens eine Spindel (42) zumindest über eine Teilstrecke des Einspritzhubes innerhalb einer Ausnehmung (22) des mittigen Aufnahmeelements (20) verfahrbar aufgenommen ist,
- wobei ein mit der wenigstens einen Spindel (42) zusammenwirkender Einspritzmotor (50) vorgesehen ist, der über eine Übersetzung wie ein Einspritzgetriebe (52) mit der Spindel (42) in Wirkverbindung steht,
- wobei ein Dosierantrieb (60) zum Drehen des Förderelements (12) beim Dosieren des plastifizierbaren Materials vorgesehen ist, der über ein Dosiergetriebe (62) mit dem Förderelement (12) wirkverbunden ist,
**dadurch gekennzeichnet,**
**dass** das hintere Aufnahmeelement (30) gehäuseartig ausgebildet ist, wobei das Einspritzgetriebe (52) und das Dosiergetriebe (62) zumindest teilweise im hinteren Aufnahmeelement (30) aufgenommen sind.

2. Spritzgießeinheit nach Anspruch 1, **dadurch gekennzeichnet, dass** das mittige Aufnahmeelement (20) gehäuseartig ausgebildet ist oder ein mittiges Aufnahmegehäuse (24) aufweist, wobei die Ausnehmung (22) im mittigen Aufnahmeelement (20) oder im mittigen Aufnahmegehäuse (24) ausgebildet ist.

3. Spritzgießeinheit nach Anspruch 1 oder 2, **dadurch gekennzeichnet, dass** der Spindelantrieb (40) eine mit der Spindel (42) zusammenwirkende Spindelmutter (44) aufweist, wobei die Spindelmutter (44) an einer dem hinteren Aufnahmeelement (30) zugewandten Seite des mittigen Aufnahmeelements (20) angeordnet ist.

4. Spritzgießeinheit nach Anspruch 3, **dadurch gekennzeichnet, dass** die Ausnehmung (22) in axialer Verlängerung oder koaxial zur Spindelmutter (44) ausgebildet ist.

5. Spritzgießeinheit nach Anspruch 3 oder 4, **dadurch gekennzeichnet, dass** die feststehende Spindelmutter (44) am mittigen Aufnahmeelement (20) gelagert ist und die wenigstens eine Spindel (42) relativ zum mittigen Aufnahmeelement (20) axial beweglich ist.

6. Spritzgießeinheit nach einem der vorhergehenden Ansprüche, **dadurch gekennzeichnet, dass** der Spindelantrieb (40) zur Umsetzung des Einspritzhubes zur ziehenden axialen Verlagerung des hinteren Aufnahmeelements (30) zusammen mit dem Förderelement (12) in Richtung zum mittigen Aufnahmeelement (20) eingerichtet ist.

7. Spritzgießeinheit nach einem der vorhergehenden Ansprüche, **dadurch gekennzeichnet, dass** zwei beidseitig, vorzugsweise symmetrisch, zum Förderelement (12) angeordnete Spindelantriebe (40) mit einander gegenüberliegenden Spindeln (42) vorgesehen sind, wobei jede Spindel (42) zumindest über eine Teilstrecke des Einspritzhubes innerhalb einer zugeordneten Ausnehmung (22) des mittigen Aufnahmeelements (20) verfahrbar angeordnet ist.

8. Spritzgießeinheit nach einem der vorhergehenden Ansprüche, **dadurch gekennzeichnet, dass** der mit der Spindel (42) zusammenwirkender Einspritzmotor (50) am hinteren Aufnahmeelement (30) angeordnet ist.

9. Spritzgießeinheit nach einem der vorhergehenden Ansprüche, **dadurch gekennzeichnet, dass** der Einspritzmotor (50) an einer dem mittigen Aufnahmeelement (20) zugewandten Seite des hinteren Aufnahmeelements (30) und/oder unterhalb des Förderelements (12) und/oder des Spindelantriebs (40) angeordnet ist.

10. Spritzgießeinheit nach einem der vorhergehenden Ansprüche, **dadurch gekennzeichnet, dass** der Dosierantrieb (60) zentrisch zum Förderelement (12) in der Spritzache (a-a) und/oder an einer dem mittigen Aufnahmeelement (20) abgewandten Seite des hinteren Aufnahmeelements (30) und/oder oberhalb des Einspritzmotors (50) angeordnet ist.

11. Spritzgießeinheit nach einem der vorhergehenden Ansprüche, **dadurch gekennzeichnet, dass** der Dosierantrieb (60) exzentrisch zum Förderelement (12) und/oder an einer dem mittigen Aufnahmeelement (20) zugewandten Seite des hinteren Aufnahmeelements (30) angeordnet ist.

12. Spritzgießeinheit nach einem der vorhergehenden Ansprüche, **dadurch gekennzeichnet, dass** das hintere Aufnahmeelement (30) wenigstens ein Stützelement (34) zur Abstützung auf dem Maschinenständer (14) aufweist, vorzugsweise wobei das Stützelement (34) zur Wirkverbindung mit einer insbesondere sich entlang der Spritzachse (a-a) erstreckenden Führungsschiene (16) eingerichtet ist.

13. Spritzgießeinheit nach einem der vorhergehenden Ansprüche, **dadurch gekennzeichnet, dass** das mittige Aufnahmeelement (20) und das hintere Aufnahmeelement (30) mit dem wenigstens einen Spindelantrieb (40), vorzugsweise mit den zwei Spindelantrieben (40), einen Kraftrahmen für den Einspritzhub bilden.

14. Spritzgießeinheit nach einem der vorhergehenden Ansprüche, **dadurch gekennzeichnet, dass** das hintere Aufnahmeelement (30) an einer dem mittigen Aufnahmeelement (20) abgewandten Seite im Wesentlichen vollständig geschlossen und/oder frei von vorstehenden technischen Bauteilen oder Komponenten ausgebildet ist.

15. Maschine zur Verarbeitung von Kunststoffen und anderer plastifizierbarer Massen, insbesondere Spritzgießmaschine, mit einem Maschinenständer (14) und einer darauf über ein mittiges Aufnahmeelement (20) und ein hinteres Aufnahmeelement (30) angeordneten Spritzgießeinheit (1), wobei eine Plastifiziereinheit (10) der Spritzgießeinheit (1) an einer Aufnahmeplatte (15) der Maschine lösbar festgesetzt ist,
**dadurch gekennzeichnet, dass** die Spritzgießeinheit (1) nach einem der vorhergehenden Ansprüche ausgebildet ist.
